# EUROPÄISCHE PATENTSCHRIFT

(11) **EP 3 414 152 B1**
(45) Veröffentlichungstag und Bekanntmachung des Hinweises auf die Patenterteilung: **08.04.2020**
(21) Anmeldenummer: 17705348.5
(22) Anmeldetag: 10.02.2017
(51) Int. Cl.: B62M 3/06, B62M 3/00, B62M 9/08

(54) **FAHRRADGETRIEBE MIT UNRUNDEM KETTENBLATT**
BICYCLE GEARING HAVING A NONCIRCULAR CHAINRING
TRANSMISSION DE BICYCLETTE À PLATEAU NON CIRCULAIRE

(30) Priorität: 12.02.2016 DE 102016001660; 22.04.2016 DE 102016004888
(43) Veröffentlichungstag der Anmeldung: 19.12.2018
(73) Patentinhaber: Möve Bikes GmbH, 99974 Mühlhausen (DE)
(72) Erfinder: SCHUBERT, Stefan, 99974 Mühlhausen (DE); SPRÖTE, Tobias, 99974 Mühlhausen (DE); ROCHLITZER, Marcus, 99974 Mühlhausen (DE)
(74) Vertreter: Fritzsche, Thomas
(86) Internationale Anmeldenummer: PCT/EP2017/053083
(87) Internationale Veröffentlichungsnummer: WO 2017/137610

(56) Entgegenhaltungen:
- EP-A2- 0 262 841
- WO-A1-2013/191572
- US-A- 4 193 324

## Beschreibung

Die Erfindung betrifft ein Fahrradgetriebe gemäß der im Oberbegriff des Anspruchs 1 stehenden Merkmale.

Derartige Fahrradgetriebe sorgen für eine Vergrößerung des Drehmomentes der vom Radfahrer eingeleiteten Kraft. Hierzu wird das Fahrradgetriebe an ein Fahrrad adaptiert und ein Zahnrad, zum Beispiel ein Zahnkranz, überträgt das vom Radfahrer erzeugte Drehmoment über eine Kette oder einen Zahnriemen auf das Hinterrad.

Einen gattungsgemäßen Stand der Technik bildet die DE 10 2010 033 211 B4 mit einem Fahrradgetriebe, bei dem das Sonnenrad, das Planetenrad und die Triebkurbel innerhalb eines gemeinsamen Kurbelgehäuse angeordnet sind und sich der Kurbelarm mittels einer Führungsrolle an einer ebenfalls im Kurbelgehäuse angeordneten Führungsschiene abstützt. Als nachteilig hat sich bei dem bekannten Getriebe herausgestellt, dass die Füße während des Tretens aufgrund unterschiedlicher Beschleunigungen im Verlauf einer Umdrehung der Tretkurbeln keine gleichmäßige Bewegung vollziehen und daraus resultierend der Radfahrer die Tretbewegung als "Stampfen" empfindet.

Aus der EP 1 863 699 B1 ist ein ovales Kettenblatt bekannt, welches in Bereichen der größten Kraftentwicklung, das heißt ungefähr in der 90°-Stellung der Tretkurbel, einen maximalen, wirksamen Durchmesser aufweist. Hierdurch soll ein maximales Drehmoment vom Radfahrer aufgebracht und auf die Kette übertragen werden können. In der Praxis führt das ovale Kettenblatt jedoch ebenfalls zu einem ungleichmäßigen Trittgefühl mit Phasen hoher und niedriger Beschleunigung des Fußes während einer vollständigen Umdrehung des ovalen Kettenblattes.

Dokument EP 0 262 841 A2 offenbart die Präambel des Anspruchs 1. Weitere relevante Dokumente sind US 4 193 324 A und WO 2013/191572 A1.

Folglich lag der Erfindung die Aufgabe zugrunde, ein gattungsgemäßes Fahrradgetriebe dahingehend zu verbessern, dass von dem Radfahrer ein runderes Trittgefühl wahrgenommen wird.

Die Aufgabe wird erfindungsgemäß mit dem kennzeichnenden Merkmal des Anspruchs 1 gelöst. Unter einer ovalen Form wird eine geschlossene zweimal stetig differenzierbare konvexe Kurve in der Ebene verstanden. Dabei ist die ovale Form des Zahnrades derart zu dem Stirnradgetriebe ausgerichtet, dass im Viergelenk auftretende Beschleunigungen des Fußes während des Tretens reduziert sind. Die Position der Tretkurbel zu dem ovalen Kettenblatt verändert sich während einer Umdrehung permanent.

Das erfindungsgemäße Fahrradgetriebe ermöglicht die Bildung eines maximalen Momentes durch Zuhilfenahme einer Kraftübersetzung bei gleichzeitiger Führung eines krafteinleitenden Elementes längs einer homogenen Bahn. Das krafteinleitende Element ist dabei der Fuß eines Radfahrers. Die Homogenität resultiert einerseits aus der durchgehend konvexen Bahnform und andererseits aus der Reduzierung von absoluten Beschleunigungen im Bereich des krafteinleitenden Elementes aufgrund des ovalen Zahnrades. Die an der Übertragung des Drehmoments beteiligten Komponenten wie Kurbel und Tretkurbel verändern während eines Getriebeumlaufes ihre Länge nicht, sondern verschwenken lediglich gegeneinander.

Vorzugsweise weist das Zahnrad einen größeren Hauptachsendurchmesser und einen kleineren Nebenachsendurchmesser auf, wobei der Hauptachsendurchmesser in Drehrichtung des Zahnrades stets unter einem Winkel von 60° bis 130° versetzt zu einer zwischen der Zentral-Lagerachse und der Planetenrad-Lagerachse verlaufenden Verbindungslinie ausgerichtet ist. Besonders bevorzugt ist eine Ausführungsform, bei welcher der Winkel 70° bis 120°, ganz besonders bevorzugt 80° bis 110° beträgt. Gemäß einer noch weiter optimierten Ausgestaltung beträgt der Winkel 90° bis 100°. In diesen Winkelbereichen wird eine besonders angenehmes Tretgefühl ohne Stampfbewegung des belasteten Fußes empfunden.

Zweckmäßigerweise umfasst das Viergelenk eine um die Zentral-Lagerachse drehbar gelagerte Trägerplatte, an welcher außermittig das Planetenrad drehbar gelagert ist. Vorteilhafterweise ist die Trägerplatte mit einem zentrischen Abschnitt drehfest mit einer in der Zentral-Lagerachse angeordneten Zentralwelle verbunden. Somit bilden die Trägerplatte und die Zentralwelle eine gemeinsame Baugruppe und drehen bei Betätigung der Tretkurbel(n) gemeinsam um die Zentral-Lagerachse. Vorzugsweise ist die Zentralwelle konzentrisch innerhalb des ersten und/oder zweiten Sonnenrades angeordnet. Der Vorteil dieser Ausführungsform liegt darin, dass das Getriebe in axialer Richtung der Zentralwelle besonders kompakte Abmessungen aufweist.

Gemäß einer ersten günstigen Ausführungsform weist das Viergelenk drei Drehgelenke und ein Schubgelenk auf. Alternativ zu dieser Ausführungsform kann das Viergelenk vier Drehgelenke aufweisen.

Vorzugsweise ist ein erstes Drehgelenk zwischen dem Planetenrad und der Trägerplatte angeordnet. Das erste Drehgelenk sorgt für eine Rotation des Planetenrades um dessen vorgegebene Lagerachse.

Günstigerweise ist ein zweites Drehgelenk zwischen der Kurbel und der Tretkurbel angeordnet. Das zweite Drehgelenk ermöglicht eine Rotation der Kurbel relativ zu der Tretkurbel.

Darüber hinaus kann das Viergelenk ein Kopplungsmittel umfassen, welches zwischen der Trägerplatte und der Tretkurbel mittels mindestens eines dritten Drehgelenkes angeordnet ist.

Vorteilhafterweise umfasst das Kopplungsmittel das Schubgelenk. Das Schubgelenk kann beispielsweise eine Linearführung sein. Unter einer Linearführung wird eine ein mechanisches Führungselement verstanden, mit dessen Hilfe ein Bauteil gegen ein anderes Bauteil auf einer Geraden bewegt werden kann. Die Linearführung hat einen einzigen Freiheitsgrad. Dabei muss die Linearführung auch auftretende Kippmomente aufnehmen. Günstigerweise umfasst die Linearführung mindestens eine Führungsschiene mit einem darauf geführten Schlitten. Unter einer Führungsschiene werden lineare Trag- und Führungselemente verstanden, die einzeln oder paarig und parallel zueinander angeordnet sind. Der Schlitten ist im Betrieb unlösbar mit der mindestens einen Führungsschiene verbunden und an dieser geführt.

Zweckmäßigerweise ist die Linearführung ortsfest an der Trägerplatte befestigt, so dass der Schlitten bei umlaufendem Fahrradgetriebe in bezüglich der Zentral-Lagerachse radialer Richtung hin und her verfährt. Vorzugsweise ist das dritte Drehgelenk zwischen der Tretkurbel und einem Schlitten der Linearführung angeordnet.

Anstelle des Schubgelenkes kann das Kopplungsmittel einen mittels des dritten und eines vierten Drehgelenkes gelagerten Pendelarm umfassen. Unter einem Pendelarm wird ein starres Bauteil verstanden, welches ausgehend von einer Mittellage mit einem Ende in zwei Richtungen um einen Lagerpunkt schwenkt. Hieraus resultiert der Vorteil, dass auf ein kinematisch zwar optimales aber im Betrieb anfälliges Schubgelenk verzichtet werden kann und alle eingesetzten Lager als Drehlager ausgeführt sein können. Bei dieser Betrachtung wird das Viergelenk von der kontinuierlich umlaufenden Kurbel angetrieben. Die Kurbel weist stets die kleinste Länge innerhalb des Viergelenks auf. Der Abtrieb des Viergelenks erfolgt mittels des Pendelarms, der eine schwingende Bewegung um das vierte Drehgelenk ausführt. Die Kurbel und der Pendelarm sind über eine Koppel miteinander verbunden, welche aus einem Abschnitt der Tretkurbel zwischen deren zweitem und drittem Drehgelenk gebildet ist. Sowohl die Kurbel als auch der Pendelarm sind drehbar an der Trägerplatte gelagert, wobei die Kurbel fest mit dem umlaufenden Planetenrad verbunden ist. Das dritte Drehgelenk vollzieht anstelle einer linearen Bewegung eines Schubgelenkes lediglich eine angenähert lineare Bewegung auf einer Kreisbahn mit sehr großem Radius.

Günstigerweise ist das dritte Drehgelenk zwischen der Tretkurbel und dem Pendelarm und das vierte Drehgelenk zwischen dem Pendelarm und der Trägerplatte angeordnet.

Es hat sich als besonders günstig erwiesen, wenn die Kurbel und der Pendelarm auf einer gemeinsamen Seite der Tretkurbel angeordnet sind. Die Tretkurbel liegt somit bezüglich des Fahrradgetriebes in axialer Richtung der Zentralwelle außen, was zu einem besonders geringen Q-Faktor beiträgt. Vorteilhafterweise sind dann auch die Kurbel und der Pendelarm in axialer Richtung der Zentralwelle zwischen der Trägerplatte und der Tretkurbel angeordnet.

Zweckmäßigerweise nimmt das vierte Drehgelenk eine Position auf einer Mittelsenkrechten ein, welche senkrecht auf einer zwischen der Lagerachse des dritten Drehgelenkes in dessen 0° und 90° Stellung verlaufenden Verbindungslinie steht. Die beiden Lagerachsen liegen somit in ihren Endlagen auf einer Geraden, welche die Zentral-Lagerachse des Fahrradgetriebes schneidet. Das Viergelenk stellt dann eine zentrische Kurbelschwinge dar.

Vorteilhafterweise ist das Zahnrad drehfest mit der Trägerplatte und/oder der Zentralwelle verbunden, so dass das vom Radfahrer aufgebrachte Drehmoment über das Fahrradgetriebe möglichst verlustfrei auf das Zugmittel, insbesondere eine Fahrradkette, übertragen wird.

Vorzugsweise weist das Sonnenrad und das Planetenrad ein festes Übersetzungsverhältnis von 1:2 auf. Hierdurch bleibt die Relativposition von Stirnradgetriebe und Viergelenk während eines Getriebeumlaufs stets konstant zueinander.

In eingebautem Zustand des Fahrradgetriebes kann das Stirnradgetriebe ein feststehendes zweites Sonnenrad umfassen, wobei das Sonnenrad und das zweite Sonnenrad an gegenüberliegenden Seiten eines Rahmenelementes anbringbar sind, und ein auf dem zweiten Sonnenrad ablaufendes, um eine zweite Planetenrad-Lagerachse rotierendes zweites Planetenrad vorgesehen sein, welches mit einem zweiten Viergelenk zusammenwirkt, wobei das zweite Viergelenk eine zweite Kurbel umfasst, die fest mit dem zweiten Planetenrad und drehbeweglich mit einer zweiten Tretkurbel verbunden ist. Hierdurch wird ein Fahrradgetriebe bereitgestellt, welches ausgehend von einer mittig angeordneten Zentralwelle auf jeder Seite ein Sonnenrad und ein das Sonnenrad umkreisendes, symmetrisches Viergelenk aufweist. Diese Ausführungsform korrespondiert mit konventionellen Tretlagern, bei denen auf beiden Seiten des Fahrradrahmens eine Tretkurbel vorgesehen ist.

Zweckmäßigerweise sind das zweite Planetenrad und das zweite Viergelenk um 180° zu dem Planetenrad und dem Viergelenk versetzt ausgerichtet. Hierdurch wird erreicht, dass das Viergelenk und das zweite Viergelenk symmetrisch die Zentral-Lagerachse umlaufen, wodurch sich beispielweise die Tretkurbel im unteren Totpunkt und die zweite Tretkurbel im oberen Totpunkt zeitgleich befindet.

Zum besseren Verständnis wird die Erfindung nachfolgend anhand von 5 Figuren näher erläutert. Es zeigen die:
- **Fig. 1:**: eine Seitenansicht auf das Fahrradgetriebe gemäß einer ersten Ausführungsform in einer 0°-Stellung der Tretkurbel;
- **Fig. 2:**: eine Seitenansicht des Fahrradgetriebes gemäß Fig. 1 in einer 90°-Stellung der Tretkurbel und 270°-Stellung der zweiten Tretkurbel;
- **Fig. 3:**: einen Längsschnitt durch das Fahrradgetriebe in der 0°-Stellung der Tretkurbel und 180°-Stellung der zweiten Tretkurbel;
- **Fig. 4:**: eine Seitenansicht auf das Fahrradgetriebe gemäß einer zweiten Ausführungsform in einer 0°-Stellung der Tretkurbel und
- **Fig. 5:**: eine Seitenansicht des Fahrradgetriebes gemäß Fig. 4 in einer 90°-Stellung der Tretkurbel.

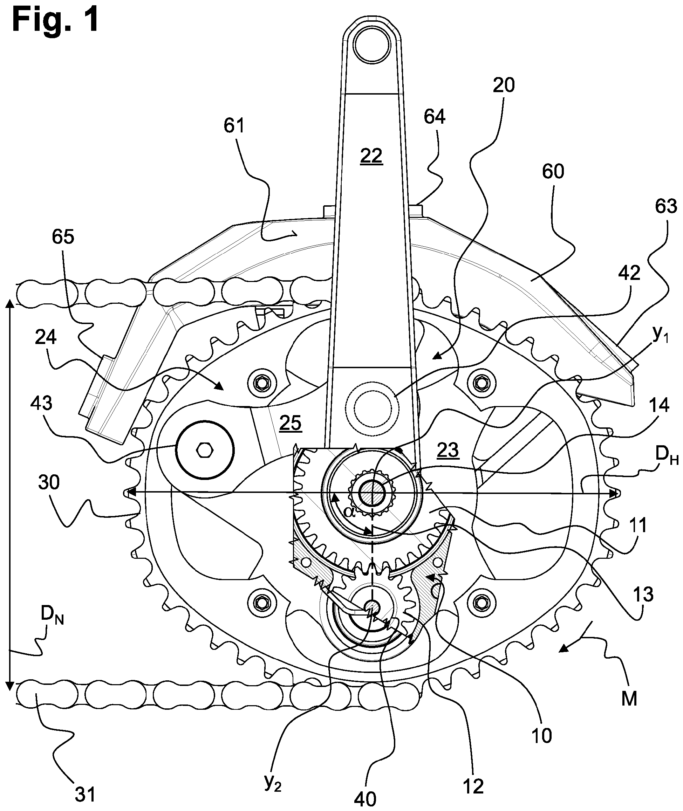

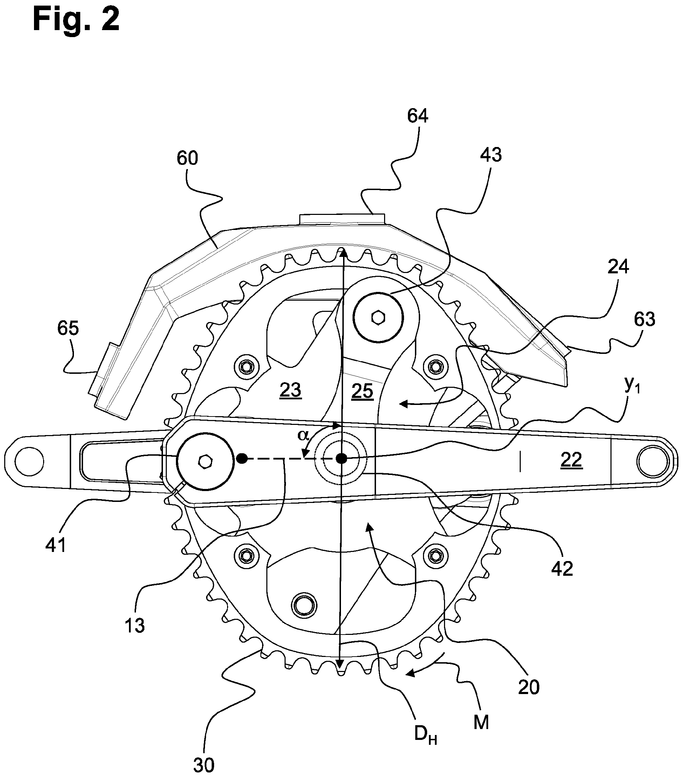

Die Fig. 1 zeigt eine Seitenansicht auf das erfindungsgemäße Fahrradgetriebe gemäß einer ersten Ausführungsform in einer 0°-Stellung einer Tretkurbel 22 und die Fig. 2 die um 90° im Uhrzeigersinn entsprechend Drehrichtung M verdrehte Tretkurbel 22 in der 90°-Stellung.

Beide Fign. 1 und 2 stellen das erfindungsgemäße Fahrradgetriebe in Einbaulage dar, welches mittels eines Rahmenelementes 60 mit einem hier nicht gezeigten Fahrradrahmen verbindbar ist. Hierfür weist das Rahmenelement 60 drei Anschlussflansche 63, 64, 65 zum Anschluss an ein Vorderrohr (Anschlussflansch 63), ein Sattelrohr (Anschlussflansch 64) und einen Hinterbau (Anschlussflansch 65) auf.

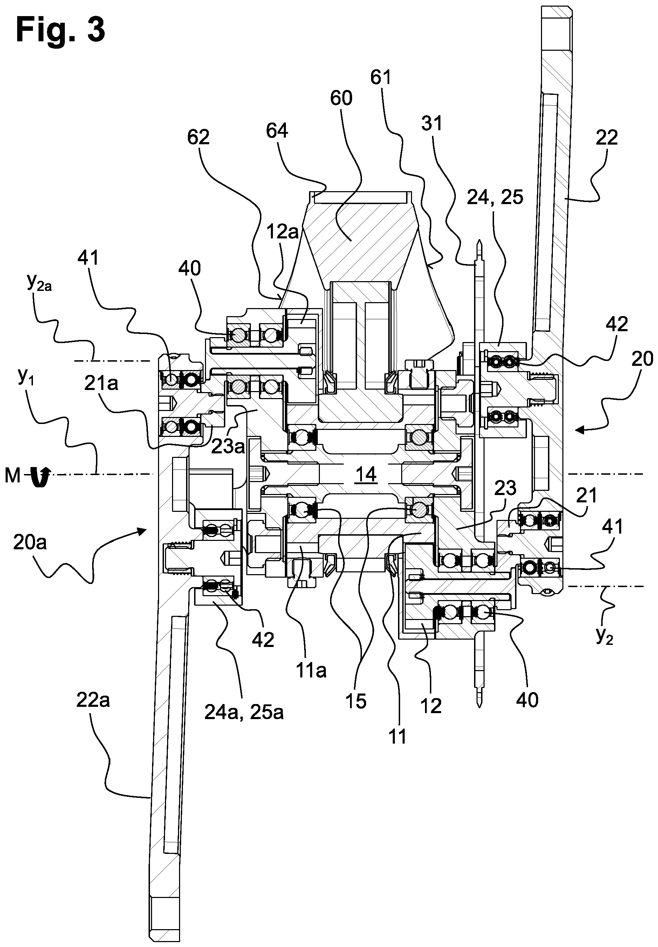

Auf einer ersten Seite 61 des Rahmenelementes 60 ist ein feststehendes Sonnenrad 11 zu erkennen, welches mit einem Planetenrad 12 ein Stirnradgetriebe 10 bildet, sowie ein mit dem Stirnradgetriebe 10 zusammenwirkendes Viergelenk 20. Auf einer zweiten, hier verdeckten Seite 62 des Rahmenelementes 60 ist ein zweites Sonnenrad 11a angeordnet, welches mit einem zweiten Viergelenk 20a zusammenwirkt (siehe Fig. 3). Die Bezugszeichen der in der Bildebene der Fign. 1 und 2 hinter dem Rahmenelement 60 liegenden Bauteile sind durch den Buchstaben "a" gekennzeichnet und überwiegend in dem Längsschnitt der Fig. 3 zu erkennen.

Beide Viergelenke 20, 20a wirken auf eine Zentralwelle 14, die quer durch das Rahmenelement 60 verläuft und dessen vordere Stirnseite sichtbar ist. Die Zentralwelle 14 definiert eine Zentral-Lagerachse y₁ des Fahrradgetriebes.

An beiden axialen Endabschnitten der Zentralwelle 14 ist drehfest eine Trägerplatte 23, 23a angebracht, welche im Betrieb des Fahrradgetriebes zusammen mit der Zentralwelle 1 eine kreisförmige Drehbewegung ausführt. Die Verbindung der Trägerplatte 23 mit der Zentralwelle 14 erfolgt in einem zentrisch in der Trägerplatte 23 angeordneten Abschnitt. In einem hierzu außenliegenden Abschnitt der Trägerplatte 23 ist das Planetenrad 12 gegenüber der Trägerplatte 23 mittels eines ersten Drehgelenkes 40 drehbar gelagert.

An dem Planetenrad 12, 12a ist eine Kurbel 21, 21a entweder drehfest angebracht oder integral, einstückig angeformt. Die Kurbel 21, 21a steht in radialer Richtung, axial versetzt, gegenüber dem Planetenrad 12, 12a vor und greift drehbeweglich mittels eines zweiten Drehgelenkes 41 an der Tretkurbel 22, 22a an (siehe Fig. 3).

Mit der Trägerplatte 23 ist außerdem ein kinematisches Kopplungsmittel 24, 24a in Form eines Pendelarms 25, 25a drehbeweglich verbunden. Ein erstes Ende des Pendelarms 25, 25a greift mittels eines dritten Drehgelenkes 42 an der dem Rahmenelement 2 zugewandten Seite der Tretkurbel 22 an. An dem gegenüberliegenden Ende des Pendelarmes 25 ist dieser mittels eines vierten Drehgelenkes 43 drehbar an der Trägerplatte 23 befestigt.

Die Krafteinleitung erfolgt von dem Radfahrer über nicht gezeigte Pedale auf die zwei Tretkurbeln 22, 22a, welche das Fahrradgetriebe in axialer Richtung der Zentralwelle 14 nach außen begrenzen (siehe Fig. 3). Die Figuren 1, 3 und 4 zeigen die Tretkurbeln 22, 22a und das jeweils zugehörige Viergelenk 20, 20a in einer 0°-Stellung, in welcher die Tretkurbel(n) 22, 22a und die zugehörige Kurbel 21, 21a gestreckt sind, das heißt die Kurbel 21, 21a ausgehend von einer Planetenrad-Lagerachse y₂, y₂ₐ des Planetenrades 12, 12a radial nach innen in Richtung der Zentralwelle 14 zeigt. Das freie Ende der Tretkurbel 22, 22a befindet sich hierdurch in einer maximal ausgefahrenen Position.

An der Trägerplatte 23 greift von außen ein Zahnrad 30 an, welches die Drehbewegung des Fahrradgetriebes auf ein Zugmittel in Form einer Kette 31 überträgt.

Das Zahnrad 30 weist eine ovale Form auf, welche durch einen Hauptachsendurchmesser D_{H} und einen Nebenachsendurchmesser D_{N} aufgespannt ist, wobei der Hauptachsendurchmesser D_{H} unter einem Winkel α von ca. 90° zu einer Verbindungslinie 13 verläuft. Die Verbindungslinie 13 schneidet unabhängig von der Ausrichtung des Stirnradgetriebes 10 stets die Zentral-Lagerachse y₁ der Zentralwelle 14 und die Planetenrad-Lagerachse y₂, y₂ₐ des Planetenrades 12, 12a. Bei dieser Ausrichtung des ovalen Zahnrades 30 werden Beschleunigungen des Fußes insbesondere rings um den Bereich der 90°-Position besonders effektiv vermindert.

Der Längsschnitt gemäß Fig. 3 zeigt auch das bezüglich des Rahmenelementes 60 feststehende zweite Sonnenrad 11a, welches auf der zweiten Seite 62 des Rahmenelementes 2 angeordnet ist. Das Sonnenrad 11 und das zweite Sonnenrad 11b sind fest miteinander verbunden und bilden eine einstückig, integrale Baueinheit. Unter einer einstückig, integralen Baueinheit wird eine zerstörungsfrei nicht separierbare Verbindung verstanden.

Innerhalb der Sonnenräder 11, 11a verläuft konzentrisch die Zentralwelle 14, welche im Bereich des ersten und zweiten Sonnenrades 11, 11a mittels jeweils eines Zentralwellenlagers 15 drehbar gelagert ist.

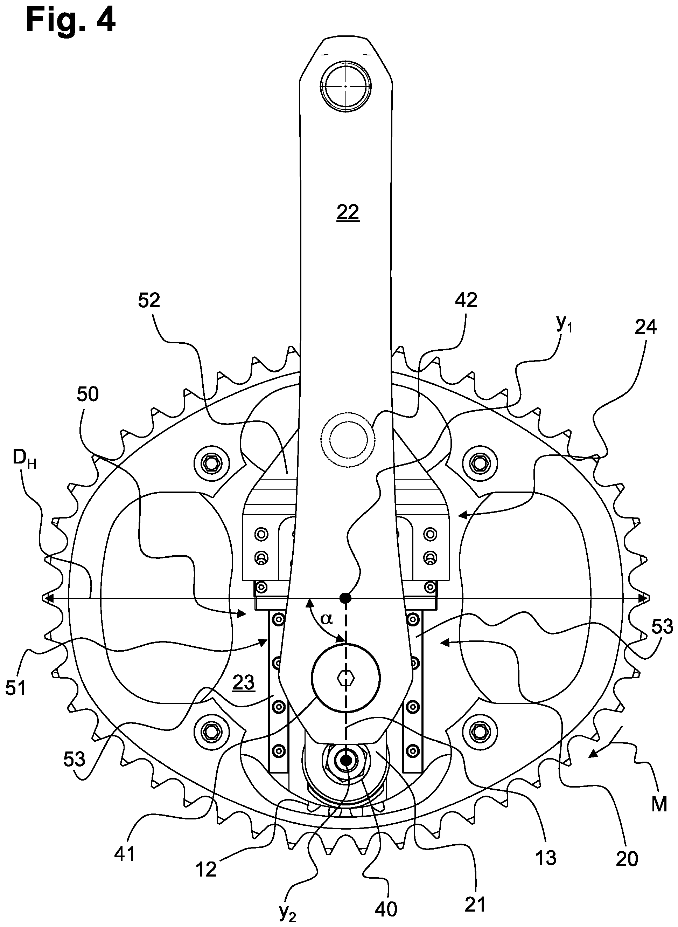

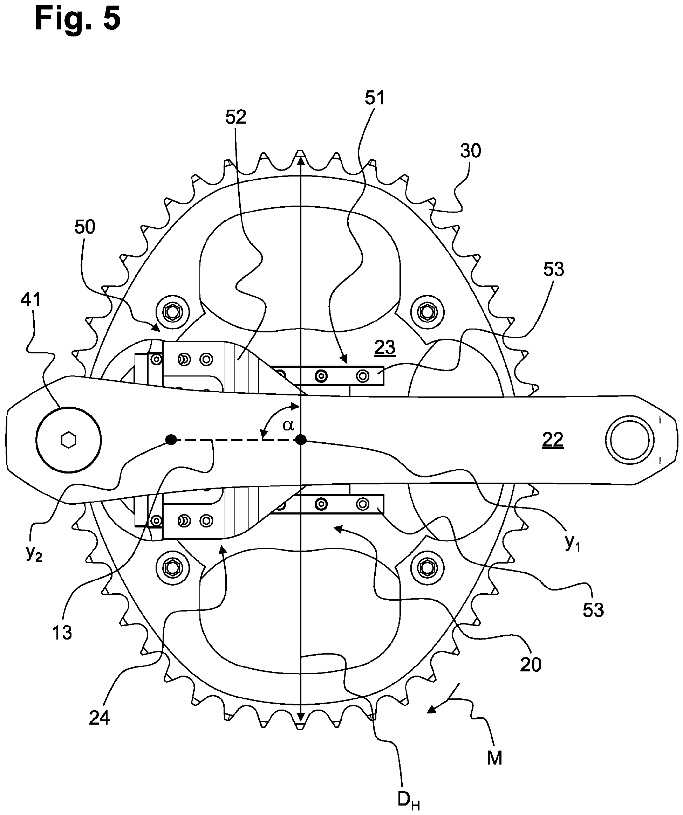

In den Fign. 4 und 5 sind eine 0°-Stellung (Fig. 4) und eine 90°-Stellung der Tretkurbel 22 an einer zweiten Ausführungsform gegenüberstellend dargestellt. Bei der zweiten Ausführungsform handelt es sich um ein Viergelenk 20, 20a mit drei Drehgelenken 40, 41, 42 und einem Kopplungsmittel 24 in Form eines Schubgelenkes 50. Das Schubgelenk 50 ist als Linearführung 51 ausgebildet, welche zwei parallel beabstandete Führungsschienen 53 und einen darauf in axialer Erstreckung der Führungsschienen 53 beweglichen Schlitten 52 umfasst. Die Führungsschienen 53 sind in der 0°-Stellung und der 90°-Stellung parallel zu der axialen Erstreckung der Tretkurbel 22 ausgerichtet.

Die Führungsschienen 53 sind ortsfest an der Trägerplatte 23 befestigt und drehen im Betrieb des Fahrradgetriebes in Drehrichtung M um die Zentral-Lagerachse y₁. Der Schlitten 52 ist außerdem drehbeweglich über das dritte Drehgelenk 42 mit der Tretkurbel 22 verbunden.

In der Darstellung der Fig. 4 mit einer in der 0°-Stellung ausgerichteten Tretkurbel 22 verläuft die Verbindungslinie 13 ausgehend von der Zentral-Lagerachse y₁ senkrecht durch das zweite Drehgelenk 41 bis zu der Planetenrad-Lagerachse y₂. Hierzu ist der Hauptachsendurchmesser D_{H} unter einem Winkel a von ca. 90° in Drehrichtung M des Zahnrades 30 versetzt angeordnet.

In der 90°-Stellung der Tretkurbel 22 gemäß Fig. 5 verläuft die Verbindungslinie 13 in der Bildebene horizontal zwischen der Zentral-Lagerachse y₁ und der Planetenrad-Lagerachse y₂. Der Hauptachsendurchmesser D_{H} befindet sich um den Winkel a von ca. 90° gedreht in der senkrechten Position.

### Bezugszeichenliste

- 10: Stirnradgetriebe
- 11: Sonnenrad
- 11a: zweites Sonnenrad
- 12: Planetenrad
- 12a: zweites Planetenrad
- 13: Verbindungslinie
- 14: Zentralwelle
- 15: Zentralwellenlager

- 20: Viergelenk
- 20a: zweites Viergelenk
- 21: Kurbel
- 21a: zweite Kurbel
- 22: Tretkurbel
- 22a: zweite Tretkurbel
- 23: Trägerplatte
- 23a: zweite Trägerplatte
- 24: Kopplungsmittel
- 24a: zweites Kopplungsmittel
- 25: Pendelarm
- 25a: zweiter Pedalarm

- 30: Zahnrad
- 31: Zugmittel, Kette

- 40: erstes Drehgelenk
- 41: zweites Drehgelenk
- 42: drittes Drehgelenk
- 43: viertes Drehgelenk
- 50: Schubgelenk
- 51: Linearführung
- 52: Schlitten Linearführung
- 53: Führungsschiene

- 60: Rahmenelement
- 61: erste Seite Rahmenelement
- 62: zweite Seite Rahmenelement
- 63: Anschlussflansch Vorderrohr
- 64: Anschlussflansch Sattelrohr
- 65: Anschlussflansch Hinterbau

- α: Winkel Hauptachsendurchmesser/Verbindungslinie
- D_{H}: Hauptachsendurchmesser
- D_{N}: Nebenachsendurchmesser
- M: Drehrichtung Zahnrad
- y₁: Zentral-Lagerachse
- y₂: Planetenrad-Lagerachse
- y₂ₐ: zweite Planetenrad-Lagerachse

## Patentansprüche

1. Fahrradgetriebe umfassend
- ein Stirnradgetriebe (10), welches ein feststehendes Sonnenrad (11) mit einer zentrisch darin verlaufenden Zentral-Lagerachse (y₁) sowie ein auf dem Sonnenrad (11) ablaufendes, um eine Planetenrad-Lagerachse (y₂) rotierendes Planetenrad (12) aufweist,
- ein Zahnrad (30), über welches ein Zugmittel (31) antreibbar ist,
**dadurch gekennzeichnet**,
durch einem mit dem Stirnradgetriebe (10) zusammenwirkendes Viergelenk (20), welches eine Kurbel (21) umfasst, die fest mit dem Planetenrad (12) und drehbeweglich mit einer Tretkurbel (22) verbunden ist, und wobei das Zahnrad (30) eine ovale Form aufweist.

2. Fahrradgetriebe nach Anspruch 1, **dadurch gekennzeichnet, dass** das Zahnrad (30) einen größeren Hauptachsendurchmesser (D_{H}) und einen kleineren Nebenachsendurchmesser (D_{N}) aufweist, wobei der Hauptachsendurchmesser (D_{H}) in Drehrichtung (M) des Zahnrades (30) stets unter einem Winkel von 60° bis 130° versetzt zu einer zwischen der Zentral-Lagerachse (y₁) und der Planetenrad-Lagerachse (y₂) verlaufenden Verbindungslinie (13) ausgerichtet ist.

3. Fahrradgetriebe nach Anspruch 1 oder 2, **dadurch gekennzeichnet, dass** das Viergelenk (20) eine um die Zentral-Lagerachse (y₁) drehbar gelagerte Trägerplatte (23) umfasst, an welcher außermittig das Planetenrad (12) drehbar gelagert ist.

4. Fahrradgetriebe nach einem der Ansprüche 1 bis 3, **dadurch gekennzeichnet, dass** das Viergelenk (20) drei Drehgelenke (40, 41, 42) und ein Schubgelenk (50) aufweist.

5. Fahrradgetriebe nach einem der Ansprüche 1 bis 3, **dadurch gekennzeichnet, dass** das Viergelenk (20) vier Drehgelenke (40, 41, 42, 43) aufweist.

6. Fahrradgetriebe Anspruch 4 oder 5, **dadurch gekennzeichnet, dass** ein erstes Drehgelenk (40) zwischen dem Planetenrad (12) und der Trägerplatte (23) angeordnet ist.

7. Fahrradgetriebe nach einem der Ansprüche 4 bis 6, **dadurch gekennzeichnet, dass** ein zweites Drehgelenk (41) zwischen der Kurbel (21) und der Tretkurbel (22) angeordnet ist.

8. Fahrradgetriebe nach einem der Ansprüche 3 bis 7, **dadurch gekennzeichnet, dass** das Viergelenk (20) ein Kopplungsmittel (24) umfasst, welches zwischen der Trägerplatte (23) und der Tretkurbel (22) mittels mindestens eines dritten Drehgelenkes (42) angeordnet ist.

9. Fahrradgetriebe nach Anspruch 8, **dadurch gekennzeichnet, dass** das Kopplungsmittel (24) das Schubgelenk (50) umfasst.

10. Fahrradgetriebe nach Anspruch 8, **dadurch gekennzeichnet, dass** das Kopplungsmittel (24) einen mittels des dritten und eines vierten Drehgelenkes (42, 43) gelagerten Pendelarm (25) umfasst.

11. Fahrradgetriebe nach Anspruch 10, **dadurch gekennzeichnet, dass** das dritte Drehgelenk (42) zwischen der Tretkurbel (22) und dem Pendelarm (25) und das vierte Drehgelenk (43) zwischen dem Pendelarm (25) und der Trägerplatte (23) angeordnet ist.

12. Fahrradgetriebe nach einem der Ansprüche 3 bis 11, **dadurch gekennzeichnet, dass** das Zahnrad (30) drehfest mit der Trägerplatte (23) und/oder der Zentralwelle (14) verbunden ist.

13. Fahrradgetriebe nach einem der Ansprüche 1 bis 12, **dadurch gekennzeichnet, dass** das Stirnradgetriebe (10) ein feststehendes zweites Sonnenrad (11a) umfasst, wobei das Sonnenrad (11) und das zweite Sonnenrad (11a) an gegenüberliegenden Seiten (61, 62) eines Rahmenelementes (60) anbringbar sind, und ein auf dem zweiten Sonnenrad (11a) ablaufendes, um eine zweite Planetenrad-Lagerachse (y₂ₐ) rotierendes zweites Planetenrad (12a) vorgesehen ist, welches mit einem zweiten Viergelenk (20a) zusammenwirkt, wobei das zweite Viergelenk (20a) eine zweite Kurbel (21a) umfasst, die fest mit dem zweiten Planetenrad (12) und drehbeweglich mit einer zweiten Tretkurbel (22) verbunden ist.

## Claims

1. A bicycle gearing comprising
- a spur gear (10), which comprises a fixed sun wheel (11) having a central bearing axis (y₁) extending centrally therein and a planet wheel (12) running on the sun wheel (11) and rotating around a planet wheel bearing axis (y₂),
- a gear wheel (30), via which a traction mechanism (31) is drivable,
**characterized by** a four-bar linkage (20), which interacts with the spur gear (10) and comprises a crank (21), which is fixedly connected to the planet wheel (12) and is connected in a rotationally-movable manner to a pedal crank (22), and wherein the gear wheel (30) has an oval shape.

2. The bicycle gearing according to Claim 1, **characterized in that** the gear wheel (30) has a greater main axis diameter (D_{H}) and a lesser secondary axis diameter (D_{N}), wherein the main axis diameter (D_{H}) in the rotational direction (M) of the gear wheel (30) is always aligned offset at an angle of 60° to 130° to a connecting line (13) extending between the central bearing axis (y₁) and the planet wheel bearing axis (y₂).

3. The bicycle gearing according to Claim 1 or 2, **characterized in that** the four-bar linkage (20) comprises a carrier plate (23) rotatably mounted around the central bearing axis (y₁), on which the planet wheel (12) is rotatably mounted off center.

4. The bicycle gearing according to any one of Claims 1 to 3, **characterized in that** the four-bar linkage (20) comprises three pivot joints (40, 41, 42) and one sliding joint (50).

5. The bicycle gearing according to any one of Claims 1 to 3, **characterized in that** the four-bar linkage (20) comprises four pivot joints (40, 41, 42, 43).

6. The bicycle gearing according to Claim 4 or 5, **characterized in that** a first pivot joint (40) is arranged between the planet wheel (12) and the carrier plate (23).

7. The bicycle gearing according to any one of Claims 4 to 6, **characterized in that** a second pivot joint (41) is arranged between the crank (21) and the pedal crank (22).

8. The bicycle gearing according to any one of Claims 3 to 7, **characterized in that** the four-bar linkage (20) comprises a coupling means (24), which is arranged between the carrier plate (23) and the pedal crank (22) by means of at least a third pivot joint (42).

9. The bicycle gearing according to Claim 8, **characterized in that** the coupling means (24) comprises the sliding joint (50).

10. The bicycle gearing according to Claim 8, **characterized in that** the coupling means (24) comprises a pendulum arm (25) mounted by means of the third and a fourth pivot joint (42, 43).

11. The bicycle gearing according to Claim 10, **characterized in that** the third pivot joint (42) is arranged between the pedal crank (22) and the pendulum arm (25) and the fourth pivot joint (43) is arranged between the pendulum arm (25) and the carrier plate (23).

12. The bicycle gearing according to any one of Claims 3 to 11, **characterized in that** the gear wheel (30) is connected in a rotationally-fixed manner to the carrier plate (23) and/or the central shaft (14).

13. The bicycle gearing according to any one of Claims 1 to 12, **characterized in that** the spur gear (10) comprises a fixed second sun wheel (11a), wherein the sun wheel (11) and the second sun wheel (11a) are attachable to opposing sides (61, 62) of a frame element (60), and a second planet wheel (12a), which runs on the second sun wheel (11a) and rotates around a second planet wheel bearing axis (y₂ₐ) is provided, which interacts with a second four-bar linkage (20a), wherein the second four-bar linkage (20a) comprises a second crank (21a), which is fixedly connected to the second planet wheel (12) and is connected in a rotationally-movable manner to a second pedal crank (22).

## Revendications

1. Transmission de bicyclette comprenant
- un engrenage droit (10), lequel présente une roue solaire (11) fixe avec un axe de palier central (y₁) qui s'y étend de manière centrée ainsi qu'une roue planétaire (12) roulant sur la roue solaire (11), tournant autour d'un axe de palier de roue planétaire (y₂),
- une roue dentée (30), par le biais de laquelle un moyen de traction (31) peut être entraîné,
**caractérisée par** un quadrilatère articulé (20) coopérant avec l'engrenage droit (10), lequel comprend une manivelle (21), qui est reliée de manière fixe à la roue planétaire (12) et mobile en rotation à la manivelle de pédalier (22), et dans laquelle la roue dentée (30) présente une forme ovale.

2. Transmission de bicyclette selon la revendication 1, **caractérisée en ce que** la roue dentée (30) présente un plus grand diamètre d'extrémité d'axe principal (D_{H}) et un plus petit diamètre d'extrémité d'axe auxiliaire (D_{N}), dans laquelle le diamètre d'extrémité d'axe principal (D_{H}) est orienté décalé dans le sens de rotation (M) de la roue dentée (30) toujours d'un angle de 60° à 130° par rapport à une ligne de liaison (13) s'étendant entre l'axe de palier central (y₁) et l'axe de palier de roue planétaire (y₂).

3. Transmission de bicyclette selon la revendication 1 ou 2, **caractérisée en ce que** le quadrilatère articulé (20) comprend une plaque de support (23) montée en rotation autour de l'axe de palier central (y₁), au niveau de laquelle la roue planétaire (12) est montée en rotation de manière excentrée.

4. Transmission de bicyclette selon l'une quelconque des revendications 1 à 3, **caractérisée en ce que** le quadrilatère articulé (20) présente trois pivots (40, 41, 42) et une glissière (50).

5. Transmission de bicyclette selon l'une quelconque des revendications 1 à 3, **caractérisée en ce que** le quadrilatère articulé (20) présente quatre pivots (40, 41, 42, 43).

6. Transmission de bicyclette selon la revendication 4 ou 5, **caractérisée en ce qu'**un premier pivot (40) est agencé entre la roue planétaire (12) et la plaque de support (23).

7. Transmission de bicyclette selon l'une quelconque des revendications 4 à 6, **caractérisée en ce qu'**un deuxième pivot (41) est agencé entre la manivelle (21) et la manivelle de pédalier (22).

8. Transmission de bicyclette selon l'une quelconque des revendications 3 à 7, **caractérisée en ce que** le quadrilatère articulé (20) comprend un moyen d'accouplement (24), lequel est agencé entre la plaque de support (23) et la manivelle de pédalier (22) au moyen d'au moins un troisième pivot (42).

9. Transmission de bicyclette selon la revendication 8, **caractérisée en ce que** le moyen d'accouplement (24) comprend la glissière (50).

10. Transmission de bicyclette selon la revendication 8, **caractérisée en ce que** le moyen d'accouplement (24) comprend un bras pendulaire (25) logé au moyen du troisième et d'un quatrième pivot (42, 43).

11. Transmission de bicyclette selon la revendication 10, **caractérisée en ce que** le troisième pivot (42) est agencé entre la manivelle de pédalier (22) et le bras pendulaire (25) et le quatrième pivot (43) est agencé entre le bras pendulaire (25) et la plaque de support (23).

12. Transmission de bicyclette selon l'une quelconque des revendications 3 à 11, **caractérisée en ce que** la roue dentée (30) est reliée solidaire en rotation à la plaque de support (23) et/ou à l'arbre central (14).

13. Transmission de bicyclette selon l'une quelconque des revendications 1 à 12, **caractérisée en ce que** l'engrenage droit (10) comprend une deuxième roue solaire (11a) fixe, dans laquelle la roue solaire (11) et la deuxième roue solaire (11a) peuvent être montées sur des côtés opposés (61, 62) d'un élément de cadre (60), et une deuxième roue planétaire (12a) roulant sur la deuxième roue solaire (11a), tournant autour d'un deuxième axe de palier de roue planétaire (y₂ₐ) est prévue, laquelle coopère avec un deuxième quadrilatère articulé (20a), dans laquelle le deuxième quadrilatère articulé (20a) comprend une deuxième manivelle (21a), qui est reliée de manière fixe à la deuxième roue planétaire (12) et mobile en rotation à une deuxième manivelle de pédalier (22).
